# EUROPÄISCHE PATENTSCHRIFT

(11) **EP 0 675 757 B1**
(45) Veröffentlichungstag und Bekanntmachung des Hinweises auf die Patenterteilung: **17.07.1996**
(21) Anmeldenummer: 94903765.9
(22) Anmeldetag: 13.12.1993
(51) Int. Cl.: B01J 2/04, B01J 2/10, B01J 2/20, C11D 17/06

(54) **VERFAHREN ZUM HERSTELLEN VERDICHTETER, OBERFLÄCHLICH KLEBRIGER GRANULATE SOWIE ZUR DURCHFÜHRUNG DES VERFAHRENS GEEIGNETE VORRICHTUNG**
PROCESS AND DEVICE FOR PREPARING COMPRESSED, SURFACE-STICKY GRANULATES
PROCEDE ET DISPOSITIF DE PREPARATION DE GRANULES COMPRIMES A SURFACE COLLANTE

(30) Priorität: 22.12.1992 DE 4243549; 27.03.1993 DE 4310029
(43) Veröffentlichungstag der Anmeldung: 11.10.1995
(73) Patentinhaber: Henkel Kommanditgesellschaft auf Aktien, 40191 Düsseldorf (DE)
(72) Erfinder: CARDUCK, Franz-Josef, D-42781 Haan (DE); LARSON, Bernd, D-41812 Erkelenz (DE); JACOBS, Jochen, D-42394 Wuppertal (DE); PAWELCZYK, Hubert, D-40229 Düsseldorf (DE)
(86) Internationale Anmeldenummer: EP9303522
(87) Internationale Veröffentlichungsnummer: WO9414527

(56) Entgegenhaltungen:
- WO-A-91/02047
- AT-B- 373 506
- DD-A- 221 376
- US-A- 2 812 541

## Beschreibung

Die Erfindung betrifft ein Verfahren zum Herstellen verdichteter, oberflächlich klebriger Granulate, die insbesondere in Wasch- und Reinigungsmitteln eingesetzt werden. Dabei wird ein homogenes Vorgemisch über Lochdüsen bei hohen Drucken zu einem Strang verpreßt. Der aus den Lochdüsen austretende Strang wird mit einem rotierenden Abschlagmesser auf die vorbestimmte Partikellänge quer zerteilt, so daß die Partikel radial weggeschleudert werden.

Aus den internationalen Patentanmeldungen WO91/02047 sowie WO91/13678 ist ein Verfahren zum Herstellen verdichteter Granulate von Inhaltsstoffen von Wasch- und Reinigungsmitteln bekannt. Der Inhalt dieser Anmeldungen wird ausdrücklich auch zum Offenbarungsgehalt der vorliegenden Anmeldung gemacht. Die Granulate werden aus Vorgemischen von wenigstens anteilsweise festen Inhaltsstoffen unter Zusatz von wasserlöslichen, wasseremulgierbaren oder wasserdispergierbaren Plastifizier- und/oder Gleitmitteln erhalten. Die Vorgemische werden zu einer homogenen Masse verarbeitet und bei Drucken zwischen 25 und 200 bar über Lochformen mit Öffnungsweiten der vorbestimmten Granulatdimension strangförmig verpreßt. Als Homogenisier-Vorrichtung können übliche Granulier-Einrichtungen, beispielsweise Pelletpressen, Extruder mit ein und zwei Wellen, Planetwalzenextruder und andere Apparate eingesetzt werden. Ein kontinuierlich arbeitender Zwei-Schnecken-Extruder ist hier bevorzugt. Das im Extruder plastifizierte Vorgemisch tritt in Form feiner Stränge durch eine Lochdüsenplatte aus. Das Extrudat wird mittels eines rotierenden Abschlagmessers zu kugelförmigen bis zylindrischen Granulatkörnern zerkleinert und dieses noch plastische, feuchte Primär-Granulat in einem üblichen Rondiergerät unter Mitverwendung geringer Mengen an Trockenpulver abgerundet. Zur Rezepturvervollständigung können weitere Wirkstoffe, insbesondere temperaturempfindliche Rezepturbestandteile, dem aufgetrockneten Granulat zugegeben, aufgesprüht und/oder als getrennt ausgebildetes Korn unter Ausbildung eines Mehrkorngemisches zugemischt werden. Mit dem Verfahren ist die Herstellung lagerstabiler und verklebungsfreier Konzentrate für Wasch- und Reinigungsmittel für Haushalt und Gewerbe in schütt- und rieselfähiger hochverdichteter Granulatform mit Schüttgewichten von oberhalb 700 g/l möglich.

In der technischen Ausführungsform wird die Extrusion durch eine kreisförmige, mit Düsenbohrungen versehene Platte vorgenommen. Die Lochdüsen können vertikal oder horizontal angeordnet sein. Die durch die Lochformen austretenden feinen Stränge von 0,5 bis 5 mm, typischerweise 1 bis 1,6 mm Durchmesser werden in einem Heißabschlag von einem ein- oder mehrflügeligem rotierenden Messerkopf zu zylindrischen Granulaten zerkleinert. Das Länge/Durchmesser-Verhältnis der Granulate beträgt dabei etwa 1. Die Messerschneiden der Abschlagvorrichtung liegen entweder an der Düsenplatte mit einer geringen Anpreßkraft auf oder bilden mit der Platte einen Spalt, der sehr klein gegenüber dem Durchmesser der Lochdüsen ist. Die rotierenden Messer beschleunigen die abgeschnittenen zylindrischen Granulate radial nach außen, so daß sie auf die Innenwand des Gehäuses, das auch als Granulierhaube bezeichnet wird, mit hoher Geschwindigkeit aufprallen. Die noch warnen und feuchten Partikel weisen eine erhöhte Oberflächenklebrigkeit auf, insbesondere wenn das Vorgemisch einen erhöhten Gehalt an Tensiden entsprechend den Angaben in der internationalen Patentanmeldung WO91/02047 hat. Ein beträchtlicher Anteil der Granulate haftet dadurch an der Innenwand der Granulierhaube, so daß sich Agglomerate und angebackene Produktschichten bilden. Zum Teil lösen sich die Anbackungen in unkontrollierter Weise als Agglomerate ab, zum anderen Teil wächst die Produktschicht weiter an, so daß der Produktabfluß gehemmt wird und schließlich die Abschlagvorrichtung nicht mehr betrieben werden kann. Die Anlage muß stillgesetzt und gereinigt werden. Die unerwünschten Agglomerate stören nicht nur die Funktion nachfolgender Apparate, sondern vermindern als unbrauchbarer Überkornanteil auch unmittelbar die Anlagenkapazität.

Ein Weg zur Unterdrückung dieser Störungen besteht in der Wahl von Rezepturen, die zu Granulaten mit relativ geringer Oberflächenklebrigkeit führen. Es zeigt sich jedoch, daß auch in diesem Fall Störungen und Stillzeiten der Anlage nicht zu verhindern sind, obwohl sie bei bestimmter Rezepturwahl geringer werden. Besonders nachteilig ist in diesem Fall die notwendige starke Einschränkung auf bestimmte Rezepturen.

Ein anderer Weg, um den Störungen abzuhelfen, liegt im Einblasen von Druckluft in die Granulierhaube, so daß die Teilchen vor dem Auftreffen auf die Wand durch das Luftpolster abgefangen und in Richtung auf die Austrittsöffnung hin abgelenkt werden. Jedoch steigen die erforderlichen Strömungsgeschwindigkeiten und Luftmengen mit der Drehzahl des Messerkopfes, bis schließlich die Grenze des technisch möglichen und wirtschaftlich vertretbaren Aufwandes erreicht ist. Aus wirtschaftlichen Gründen wird jedoch ein derart hoher Durchsatz des Extruders mit entsprechend hoher Drehzahl des Abschlagmessers angestrebt, bei dem das Einblasen von Druckluft nicht mehr ausreicht, um Anbackungen an der Innenwand der Granulierhaube zu verhindern.

Der Erfindung liegt daher die Aufgabe zugrunde, im eingangs genannten Verfahren auch bei sehr hohen Durchsätzen und ohne Einschränkung des Rezepturspektrums Anbackungen und Anhaftungen der Granulate an der Innenwand der Granulierhaube zu vermeiden.

Die erfindungsgemäße Lösung liegt darin, daß man die zugeschnittenen, vom Abschlagmesser weggeschleuderten Partikel mit einem flexiblen luftdurchlässigen Textilgewebe abfängt, das um das Abschlagmesser im Bereich der radial weggeschleuderten Partikel mit lockerer Spannung angeordnet ist, daß man in den derart durch das Textilgewebe gebildeten Innenraum Gas, insbesondere Luft einbläst und daß man auch die Außenseite des Textilgewebes mit diesem Gas anbläst. Bei dem Gewebe kann es sich um ein beliebiges flächiges Gewebe-Material handeln. Wesentlich ist die Flexibilität und Luftdurchlässigkeit des Gewebes. Außerdem ist das innerhalb des Textilgewebes strömende Gas, insbesondere Luft, zum Kühlen der warmen, feuchten Partikel erfindungswesentlich. Hauptsächlich findet diese Kühlung durch Verdunstung von Feuchtigkeit an der Partikeloberfläche statt. Die Beweglichkeit des Textilgewebes wird trotz des im Innenraum strömenden, das Gewebe nach außen drückenden Gasstroms durch das von außen auf das Gewebe strömende und drückende Gas gewährleistet. Im Rahmen der Erfindung liegt es auch, wenn diese Strömung von außen nach innen durch Unterdruck im Innenraum der Textilgewebe-Anordnung bewirkt wird.

Die erfindungsgemäße Lösung ist sowohl für vertikal nach unten als auch horizontal angeordnete Lochdüsen und entsprechende Messeranordnungen geeignet. Eine Einschränkung auf die eine oder andere räumliche Anordnung besteht nicht.

Im Betrieb weicht das flexible, mit Luft/Gas gepolsterte Textilgewebe beim Aufprall der Partikel aus und nimmt zunächst die Energie der aufprallenden Granulate teilweise auf. Die Partikelenergie reicht dann nicht mehr für eine ausreichende plastische Verformung aus, um eine Haftfläche zwischen dem Partikel und dem Gewebe auszubilden. Sollte dennoch ein Teil der Partikel an der Gewebeoberfläche anhaften, so platzen die Teilchen durch die schwingende und flexible Gewebeoberfläche ab. Die Schwingungsbewegung des Gewebes wird durch geeignete Lenkung der Luftströme hervorgerufen. Agglomerate oder gar Anbackungen in Schichten können damit nicht mehr entstehen.

Im Gegensatz dazu zeigten Vergleichsversuche, daß beim Durchführen des Verfahrens ohne das Tuch bzw. ohne die Auskleidung der Granulierhaube mit diesem Tuch, aber unter sonst gleichen Bedingungen, starke Anbackungen und ein Schichtenwachstum zu beobachten ist. Beispielsweise bilden sich innerhalb von 4 Stunden Schichten mit bis zu 100 mm Dicke. Wird andererseits zwar das Textilgewebe entsprechend der Erfindung, aber im Gegensatz dazu kein in den Innenraum eingeblasenes Gas verwendet, findet man ebenfalls Anbackungen, in diesem Fall am Textilgewebe.

Das Anblasen der Außenseite des Textilgewebes mit Luft oder einem anderen Gas stellt trotz der während des laufenden Betriebes ununterbrochen auf die Oberfläche des Textilgewebes in großer Zahl auftreffenden Granulate sicher, daß das Gewebe von der Aufprallkraft der Granulate nicht gegen die Innenwand einer bevorzugt vorgesehenen Granulierhaube gepreßt wird.

Die Befestigung des Textilgewebes an einer gegebenenfalls vorgesehenen Granulierhaube oder an anderen Teilen der Anlage unterliegt erfindungsgemäß keinerlei Einschränkungen. Es können z. B. Klemmleisten oder Gewichte oder anderes zum Spannen des Gewebes vorgesehen sein. Bevorzugt ist eine mäßige Spannung des Textilgewebes, so daß es sich unter der Wirkung der von außen einströmenden Luft oder eines anderen Gases wie ein Segel aufbläht und gleichsam ein Luftpolster für die aufprallenden Granulate gebildet. Eine zu starke und straffe Spannung des Gewebes ist daher nicht erwünscht.

Auch die erfindungsgemäß vorgesehene Luftdurchlässigkeit des Textilgewebes trägt dazu bei, Anbackungen zu verhindern.

Besondere effektiv werden Anbackungen verhindert, wenn man das Gas derart auf die Außen- und/oder Innenseite strömen läßt, so daß das Textilgewebe flattert. Durch die Hin- und Herbewegung jeder einzelnen Stelle des Textilgewebes platzen kleinere Anbackungen sofort ab. Das Flattern des Textilgewebes kann dadurch bewirkt werden, daß man für Turbulenzen in der Gasströmung im Bereich des Textilgewebes sorgt.

Besonders hohe Durchsätze im erfindungsgemäßen Verfahren zum Herstellen verdichteter Granulate können erreicht werden, wenn man für einen schnellen Transport der abgeschlagenen Extrudate von den Lochdüsen bzw. dem Abschlagmesser zum Austrag sorgt. Eine bevorzugte Möglichkeit besteht darin, daß man einen Teil des auf die Innenseite des Textilgewebes strömenden Gases im wesentlichen in die Richtung auf den Produktauslaß führt. Das Gas, insbesondere Luft, reißt die vom Abschlagmesser radial weggeschleuderten Partikel mit und führt sie schnell ab. Die dadurch erreichte Verringerung der Partikeldichte im Raum um das Abschlagmesser herum ermöglicht dann eine Erhöhung der Austrittsgeschwindigkeit der Stränge aus den Lochdüsen und der entsprechenden Geschwindigkeit des Abschlagmessers. Ohne diese Lenkung des Gasstromes würden die noch feuchten und warmen Partikel mit nennenswerter Häufigkeit aufeinander treffen und untereinander verbaken. Diese Agglomerate vermindern ebenfalls wie Anbackungen an Gehäuseteilen die Anlagenkapazität. Ein schnelles Abführen der vom Messer abgeschlagenen Granulate zum Produktauslaß ist also mitentscheidend für die Anlagenkapazität.

Die Luftdurchlässigkeit des Textilgewebes trägt ebenfalls wie die Beaufschlagung mit Gas von der Außen- und Innenseite zur Verhinderung von Anbackungen bei. Bevorzugt werden im erfindungsgemäßen Verfahren Textilgewebe mit Luftdurchlässigkeiten von 10 bis 1 200 l/min dm² eingesetzt.

Im erfindungsgemäßen Verfahren können Textilgewebe beliebiger Materialien eingesetzt werden, die luftdurchlässig sind. Insbesondere wird vorgeschlagen, daß man als Textilgewebe ein synthetisches Gewebe aus Polyethylen, Polypropylen, Polyamid, Polyester und/oder Polytetrafluorethylen (PTFE) einsetzt. Dabei unterliegt die geometrische Form des Textilgewebes keinerlei Einschränkungen. Wichtig ist jedoch, das sämtliche vom Abschlagmesser weggeschleuderten Partikel vom Textilgewebe aufgefangen werden.

Als Beispiele für bevorzugt eingesetzte Textilgewebe seien Gewebe aus PTFE mit 340 g/m² Gewicht und einer Luftdurchlässigkeit von 200 l/min dm² sowie Gewebe aus Polypropylen mit 300 g/m² Gewicht und einer Luftdurchlässigkeit von 180 l/min dm² genannt.

Das Abschlagmesser rotiert üblicherweise an der Lochdüsenplatte, wie oben ausgeführt worden ist. Daher wird ein Großteil der abgeschlagenen Granulate in der Höhe der Lochdüsenplatte weggeschleudert. Im Verfahren nach dem Stand der Technik finden sich daher in der Nähe der Lochdüsenplatte besonders viele Anbackungen. Die Anbackungsprobleme gerade im Bereich dieser kritischen Zone werden in einer weiteren vorteilhaften Ausführungsform des erfindungsgemäßen Verfahrens dadurch gelöst, daß sich das Textilgewebe in Richtung auf die Lochdüse hin bis unmittelbar an die Austrittsfläche der Stränge erstreckt. Auch die unmittelbar unterhalb der Lochdüsenplatte weggeschleuderten Partikel treffen damit auf die Gewebefläche und werden von dieser abgebremst und sofort wieder entfernt. Auch in dieser kritischen Zone treten damit Anbackungen und Produktschichtenbildungen nicht auf.

Die Erfindung betrifft ferner eine Vorrichtung zum Granulieren eines homogenen Vorgemisches bei hohen Drücken durch strangförmiges Verpressen durch Lochdüsen, mit einem an den Lochdüsen angeordneten rotierenden Abschlagmesser. Diese Vorrichtung ist geeignet, das oben genannte Verfahren durchzuführen, wenn ein den Bereich des Abschlagmessers umgebendes, flexibles, mit lockerer Spannung angebrachtes luftdurchlässiges Textilgewebe und eine auf die Außen- sowie die Innenseite des Textilgewebes gerichtete Gaszufuhr, insbesondere mittels Luftdüsen, vorgesehen sind.

Bevorzugt wird ein Gehäuse in Form einer Granulierhaube vorgesehen, das mit diesem Textilgewebe ausgekleidet ist.

Weitere vorteilhafte Ausführungsformen der erfindungsgemäßen Vorrichtung sind in den Unteransprüchen beschrieben.

Um Anbackungen auf dem Textilgewebe im Bereich seiner Befestigung an der Granulierhaube zu verhindern, ist das Textilgewebe mittels Leisten an der Innenseite der Granulierhaube befestigt und derart über diese Leisten geführt, daß das Textilgewebe auch im Bereich der Leisten gasdurchlässig ist. Beispielsweise kann das Textilgewebe über die Leiste hinaus gezogen sein und zwischen Leiste und der Innenwand der Granulierhaube festgeklemmt werden.

Im folgenden werden Ausführungsbeispiele der Erfindung anhand von zwei Zeichnungen näher beschrieben, ohne daß die Erfindung auf die speziellen Ausführungsformen eingeschränkt sein soll. Es zeigen
Figur 1 eine Frontalansicht auf die Lochdüsenplatte und den Messerkopf des Extruders zusammen mit einer Granulierhaube, die erfindungsgemäß mit dem Textilgewebe ausgekleidet ist und
Figur 2 einen Schnitt gemäß Linie II-II nach Figur 1.

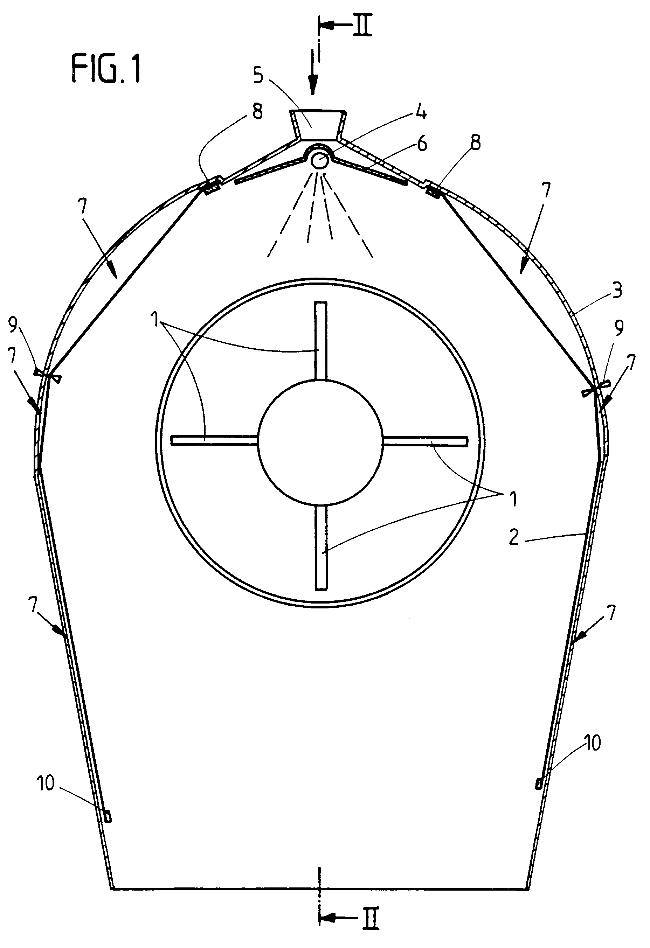

Die aus dem Extruder durch die in Figur 1 der Einfachheit halber nicht dargestellten Lochdüsen austretenden Stränge werden von vier Messern 1 eines rotierenden Messerkopfes in einzelne, kleine Partikel mit etwa gleicher Höhe und Breite quer zerteilt. Die Partikel werden von den sehr schnell rotierenden Messern radial weggeschleudert und treffen auf ein Textilgewebe 2, mit dem eine kastenförmige Granulierhaube 3 an der Innenseite ausgekleidet ist. Im unteren Teil des Bildes befindet sich der Produktauslaß. Der Produktaustrag wird mittels eines von einer Düse 4 erzeugten starken Luftstromes verstärkt. Die aus der Düse 4 nach unten strömende Luft reißt die Partikel aus dem Bereich der Abschlagmesser 1 und führt sie schnell nach unten zum Produktauslaß. Durch die obere Öffnung 5 der Granulierhaube wird außerdem Luft eingespeist, die über ein Leitblech 6 in tangentialer Richtung an der Innenwand der Granulierhaube 3 bzw. des Textilgewebes 2 entlang geführt wird. Die Außenseite des Textilgewebes 2 wird über weitere Düsen, schematisch angedeutet durch Pfeile 7, mit Luft angeblasen. Das Textilgewebe 2 ist mittels Klemmleisten 8, Klemmen 9 und Gewichten 10 an der Innenseite der Granulierhaube 3 angebracht und dort unter Spannung gehalten. Das Textilgewebe ist im Bereich der Klemmleisten 8 zwischen diesen und der Innenwand der Granulierhaube 3 festgeklemmt. Noch vorteilhafter als die Figur gezeigte Anordnung ist es, wenn man das Textilgewebe zunächst über die Klemmleiste hinaus und dann wieder zurück in den Zwischenraum zwischen Klemmleiste und Granulierhaube 3 führt, um das Gewebe dazwischen festzuklemmen. In diesem Fall ist der gesamte Bereich um die Klemmleiste 8 von dem Textilgewebe bedeckt, das auch dort an jeder Stelle freibeweglich und flexibel ist sowie von Luft durchströmt werden kann.

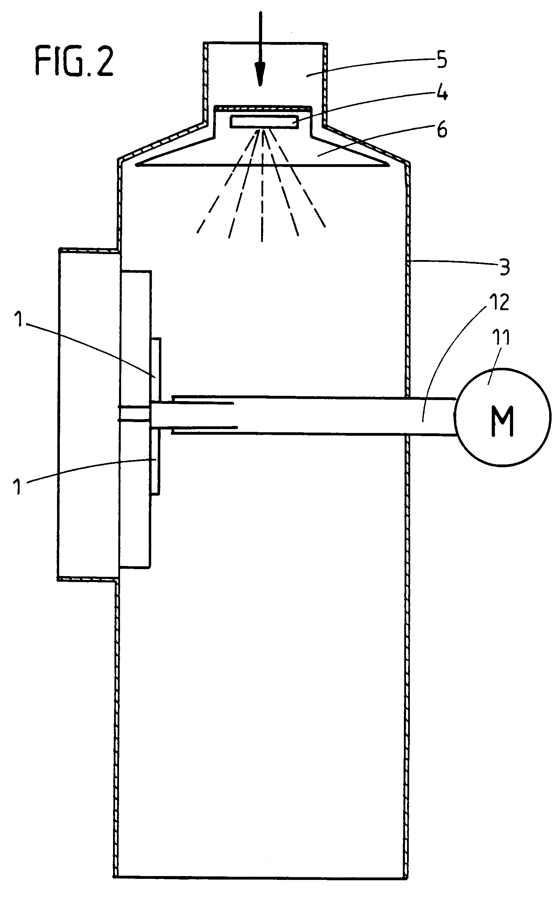

Figur 2 zeigt einen Schnitt längs der Linie II-II in Figur 1. Zusätzlich zu Figur 1 ist hier auch der Antriebsmotor 11 für die Messer 1 sowie dessen Verbindungsglied 12 mit dem Messerkopf dargestellt.

### Bezugszeichenliste

- 1: Messer
- 2: Textilgewebe
- 3: Granulierhaube
- 4: Düse
- 5: Öffnung
- 6: Leitblech
- 7: Pfeile (Düsen)
- 8: Klemmleisten
- 9: Klemmen
- 10: Gewichte
- 11: Antriebsmotor
- 12: Verbindungsglied

## Patentansprüche

1. Verfahren zum Herstellen verdichteter, oberflächlich klebriger Granulate, die insbesondere in Wasch- und Reinigungsmitteln eingesetzt werden, wobei ein homogenes Vorgemisch über Lochdüsen bei hohen Drucken zu einem Strang verpreßt und der aus den Lochdüsen austretende Strang mit einem rotierenden Abschlagmesser (1) auf die vorbestimmte Partikellänge quer zerteilt wird, so daß die Partikel radial weggeschleudert werden,
dadurch gekennzeichnet,
daß man die zugeschnittenen, vom Abschlagmesser (1) weggeschleuderten Partikel mit einem flexiblen luftdurchlässigen Textilgewebe (2) abfängt, das um das Abschlagmesser (1) im Bereich der radial weggeschleuderten Partikel mit lockerer Spannung angeordnet ist, daß man in den derart durch das Textilgewebe (2) gebildeten Innenraum Gas, insbesondere Luft einbläst und daß man auch die Außenseite des Textilgewebes (2) mit diesem Gas anbläst.

2. Verfahren nach Anspruch 1, wobei man das Gas derart auf die Außen- und/oder Innenseite strömen läßt, so daß das Textilgewebe (2) flattert.

3. Verfahren nach Anspruch 2, wobei man zumindest einen Teil des auf die Innenseite des Textilgewebes (2) strömenden Gases tangential an dieser Innenseite entlang führt.

4. Verfahren nach einem der Ansprüche 1 bis 3, wobei man einen Teil des auf die Innenseite des Textilgewebes (2) strömenden Gases im wesentlichen in Richtung auf den Produktauslaß führt.

5. Verfahren nach einem der Ansprüche 1 bis 4, wobei man ein Textilgewebe (2) mit einer Luftdurchlässigkeit von 10 bis 1 200 l/min dm² einsetzt.

6. Verfahren nach einem der Ansprüche 1 bis 5, wobei man als Textilgewebe (2) ein synthetisches Gewebe aus Polyethylen, Polypropylen, Polyamid, Polyester und/oder Polytetrafluorethylen einsetzt.

7. Verfahren nach einem der Ansprüche 1 bis 6,
dadurch gekennzeichnet,
daß sich das Textilgewebe (2) in Richtung auf die Lochdüsen hin bis unmittelbar an die Austrittsfläche der Stränge erstreckt.

8. Vorrichtung zum Granulieren eines homogenen Vorgemisches bei hohen Drücken durch strangförmiges Verpressen durch Lochdüsen, mit einem unterhalb der Lochdüsen angeordneten, rotierenden Abschlagmesser (1), gekennzeichnet durch
ein den Bereich des Abschlagmessers (1) umgebendes, flexibles mit lockerer Spannung angebrachtes luftdurchlässiges Textilgewebe (2), und durch eine auf die Außen- sowie die Innenseite des Textilgewebes (2) gerichtete Gaszufuhr, insbesondere mittels Luftdüsen.

9. Vorrichtung nach Anspruch 8, mit einem in Form einer Granulierhaube (3) ausgebildeten Gehäuse, das mit dem Textilgewebe (2) ausgekleidet ist.

10. Vorrichtung nach Anspruch 8 oder 9, wobei das Textilgewebe eine Luftdurchlässigkeit von 10 bis 1 200 l/min dm² aufweist.

11. Vorrichtung nach einem der Ansprüche 8 bis 10, wobei das Textilgewebe (2) ein synthetisches Gewebe aus Polyethylen, Polypropylen, Polyamid, Polyester und/oder Polytetrafluorethylen ist.

12. Vorrichtung nach einem der Ansprüche 8 bis 11, wobei sich das Textilgewebe (2) in Richtung auf die Lochdüsen hin bis unmittelbar an die Austrittsfläche der Stränge aus den Lochdüsen erstreckt.

13. Vorrichtung nach einem der Ansprüche 9 bis 12, wobei das Textilgewebe (2) mittels Leisten (8) an der Innenseite der Granulierhaube (3) befestigt ist und derart über diese Leisten (8) geführt ist, daß das Textilgewebe (2) auch im Bereich der Leisten (8) gasdurchlässig ist.

## Claims

1. A process for the production of compacted, surface-tacky granules which are used in particular in detergents, a homogeneous compound being extruded under high pressures through an extrusion die to form a strand and the strand issuing from the extrusion die being cut transversely to the predetermined particle length by a rotating cutting blade (1) so that the particles are projected away in the radial direction, characterized in that, after cutting to size, the particles projected away from the cutting blade (1) are collected in a flexible, air-permeable textile material (2) which is arranged loosely around the cutting blade (1) in the vicinity of the radially projected particles, in that a gas, more particularly air, is injected into the inner space formed by the textile material (2) and in that the same gas is also blown onto the outside of the textile material (2).

2. A process as claimed in claim 1, characterized in that the gas is allowed to impinge on the outside and/or inside in such a way that the textile material (2) flutters.

3. A process as claimed in claim 2, characterized in that at least part of the gas impinging on the inner surface of the textile material (2) is guided tangentially along that inner surface.

4. A process as claimed in any of claims 1 to 3, characterized in that part of the gas impinging on the inner surface of the textile material (2) is guided substantially towards the product outlet.

5. A process as claimed in any of claims 1 to 4, characterized in that a textile material (2) with a permeability to air of 10 to 1200 l/min dm² is used.

6. A process as claimed in any of claims 1 to 5, characterized in that a synthetic woven fabric of polyethylene, polypropylene, polyamide, polyester and/or polytetrafluoroethylene is used as the textile material (2).

7. A process as claimed in any of claims 1 to 6, characterized in that the textile material (2) extends towards the extrusion bores as far as the exit surface of the strands.

8. A machine for granulating a homogeneous compound under high pressures by extrusion in strand form through an extrusion die, comprising a rotating cutting blade (1) arranged beneath the extrusion die, characterized by a flexible, air-permeable textile material (2) loosely surrounding the area around the cutting blade (1) and by a gas outlet, more particularly in the form of air nozzles, directed onto the outside and inside of the textile material (2).

9. A machine as claimed in claim 8 with a housing in the form of a granulation hood (3) which is lined with the textile material (2).

10. A machine as claimed in claim 8 or 9, characterized in that the textile material has a permeability to air of 10 to 1200 l/min dm².

11. A machine as claimed in any of claims 8 to 10, characterized in that the textile material (2) is a synthetic woven fabric of polyethylene, polypropylene, polyamide, polyester and/or polytetrafluoroethylene.

12. A machine as claimed in any of claims 8 to 11, characterized in that the textile material (2) extends towards the extrusion bores as far as the exit surface of the strands.

13. A machine as claimed in any of claims 9 to 12, characterized in that the textile material (2) is fixed by bars (8) to the inside of the granulation hood (3) and is guided over these bars (8) in such a way that the textile material (2) is still permeable to gas in the vicinity of the bars (8).

## Revendications

1. Procédé de préparation de granulés comprimés, à surface collante, qui sont mis en oeuvre, en particulier, dans des agents de lavage et de nettoyage, dans lequel procédé, un prémélange homogène est comprimé en un boudin, à pressions élevées, va des injecteurs à trous, le boudin sortant des injecteurs à trous est débité transversalement à la longueur de particule prédéterminée à l'aide d'un couteau d'abattage (1) en rotation, de sorte que les particules sont projetées radialement, caractérisé en ce que,
l'on intercepte les particules découpées, projetées par le couteau d'abattage (1) au moyen d'un tissu textile (2) souple, perméable à l'air, qui est aménagé sous une tension non rigide autour du couteau d'abattage (1) dans la zone des particules projetées radialement, que l'on insuffle un gaz, en particulier de l'air, dans l'espace intérieur ainsi formé par le tissu textile (2) et que l'on balaye également la face externe du tissu textile avec ce gaz.

2. Procédé selon la revendication 1, dans lequel on fait s'écouler le gaz sur la face externe et/ou interne, de telle manière que le tissu textile (2) faseye.

3. Procédé selon la revendication 2, dans lequel on guide tout au moins une partie du gaz s'écoulant sur la face interne du tissu textile (2), tangentiellement le long de ladite face interne.

4. Procédé selon une des revendications 1 à 3, dans lequel on guide une partie du gaz s'écoulant sur la face interne du tissu textile (2), essentiellement dans la direction de la sortie de produit.

5. Procédé selon une des revendications 1 à 4, dans lequel on utilise un tissu textile (2) présentant une perméabilité à l'air de 10 à 1200 l/min dm².

6. Procédé selon une des revendications 1 à 5, dans lequel on utilise comme tissu textile (2), un tissu synthétique de polyéthyléne, polypropylène, polyamide, polyester et/ou polytétrafluoréthylène.

7. Procédé selon une des revendications 1 à 6, caractérisé en ce que
le tissu textile (2) s'étend dans la direction des injecteurs à trous jusque directement sur l'aire de sortie des boudins.

8. Dispositif de granulation d'un prémélange homogène à pressions élevées, par compression en boudin via des injecteurs à trous avec un couteau d'abattage (1) en rotation, aménagé au-dessous des injecteurs à trous,
caractérisé par
un tissu textile (2) souple, perméable à l'air, aménagé sous une tension non rigide environnant la zone du couteau d'abattage (1) et par une arrivée de gaz, en particulier à l'aide de buses d'air, dirigée vers les faces externe et interne du tissu textile (2).

9. Dispositif selon la revendication 8 avec une enveloppe ayant la forme d'un dôme de granulation (3), qui est revêtu du tissu textile (2).

10. Dispositif selon la revendication 8 ou 9, dans lequel le tissu textile présente une perméabilité à l'air de 10 à 1200 l/min dm².

11. Dispositif selon une des revendications 8 à 10, dans lequel le tissu textile (2) est un tissu synthétique de polyéthyléne, polypropylène, polyamide, polyester et/ou polytétrafluoréthylène.

12. Dispositif selon une des revendications 8 à 11, dans lequel le tissu texte (2) s'étend dans la direction des injecteurs à trous jusque directement sur l'aire de sortie des boudins hors des injecteurs à trous.

13. Dispositif selon une des revendications 9 à 12, dans lequel le tissu textile (2) est fixé à l'aide de baguettes (8) à la face interne du dôme de granulation (3) et guidé au moyen de ces baguettes (8) de telle manière que le tissu textile. (2) est également perméable au gaz au niveau des baguettes (8).
